# EUROPÄISCHE PATENTSCHRIFT

(11) **EP 3 164 603 B1**
(45) Veröffentlichungstag und Bekanntmachung des Hinweises auf die Patenterteilung: **22.01.2020**
(21) Anmeldenummer: 15723850.2
(22) Anmeldetag: 29.04.2015
(51) Int. Cl.: F04D 29/12, F04D 25/06, F02B 33/40, F16J 15/34, H02K 7/14, F02B 39/10

(54) **ELEKTRISCHER VERDICHTER FÜR EINE VERBRENNUNGSKRAFTMASCHINE**
ELECTRICAL COMPRESSOR FOR INTERNAL COMBUSTION ENGINE
COMPRESSEUR ÉLECTRIQUE POUR MOTEUR À COMBUSTION INTERNE

(30) Priorität: 02.07.2014 DE 102014109256
(43) Veröffentlichungstag der Anmeldung: 10.05.2017
(73) Patentinhaber: Pierburg GmbH, 41460 Neuss (DE)
(72) Erfinder: BURGER, Andreas, 47803 Krefeld (DE); ROTHGANG, Stefan, 47495 Rheinberg (DE); HERRMANN, Berthold, 41462 Neuss (DE)
(74) Vertreter: Patentanwälte ter Smitten Eberlein-Van Hoof Rütten Partnerschaftsgesellschaft mbB
(86) Internationale Anmeldenummer: PCT/EP2015/059367
(87) Internationale Veröffentlichungsnummer: WO 2016/000846

(56) Entgegenhaltungen:
- DE-A1-102009 005 386
- GB-A- 2 508 647
- GB-A- 2 508 921
- US-A- 6 109 617
- US-A1- 2008 181 546
- US-A1- 2009 317 265

## Beschreibung

Die Erfindung betrifft einen elektrischen Verdichter für eine Verbrennungskraftmaschine mit einem Verdichtergehäuse mit einem Spiralkanal, einem Laufrad, welches im Verdichtergehäuse angeordnet ist, einem Elektromotor, einem Elektromotorgehäuse, in dem der Elektromotor angeordnet ist, und an dem das Verdichtergehäuse befestigt ist, einer Antriebswelle, die durch den Elektromotor antreibbar ist, die über eine Lagereinheit im Elektromotorgehäuse gelagert ist und auf der das Laufrad befestigt ist und einer Dichtungseinheit, welche axial zwischen dem Laufrad und der Lagereinheit des Elektromotors angeordnet ist.

Derartige elektrische Verdichter werden in modernen Verbrennungsmotoren eingesetzt, um beispielsweise bei plötzlicher Laststeigerungsanforderung kurzfristig aktiv einen ausreichenden Ladedruck zur Verfügung stellen zu können. Insbesondere bei Verbrennungsmotoren mit kleinem Hubraum und hoher Leistung ermöglichen diese elektrischen Verdichter im leerlaufnahen Bereich entweder eine zusätzliche Nachverdichtung zum Abgasturbolader oder eine Vorverdichtung für diesen, wodurch dem so genannten Turboloch entgegen gewirkt werden kann. Auch ist der Einsatz als einzelnes Aufladeaggregat im Verbrennungsmotor möglich.

Die elektrischen Verdichter befinden sich zumeist in einem Bypasskanal der stromabwärts eines Turboladers abzweigt und der parallel zum Ansaugkanal verläuft, so dass der elektrische Verdichter wahlweise zugeschaltet werden kann.

Bei Diesel-Motoren mit einer Niederdruckabgasrückführung befindet sich der elektrische Verdichter somit stromabwärts der Abgaseinleitung in das Saugrohr, so dass er von einem Abgas-Luft-Gemisch durchströmt wird, welches verschiedene Sedimente, feinste Rußpartikel, Silizium-Rückstände aus dem Dieselpartikelfilter, Kondensate sowie einen Ölnebel aus der vorgeschalteten Verdichterstufe enthält. Diese Verunreinigungen bilden zum Teil hochkorrosive Verbindungen, die über die Rückseite des Verdichterlaufrades in Richtung des Elektromotors gelangen und dort zu Schäden an den Lagern oder der Elektronik führen können. Zudem kann sich Kondensat in elektrischen Verdichter ansammeln, was nicht ablaufen und zu einer Flutung des Elektromotors führen kann.

Diese Schäden entstehen insbesondere durch das anliegende Druckgefälle von bis zu 2,5 bar zwischen dem Verdichtergehäuse, durch das das vorverdichtete Gasgemisch gefördert wird und dem üblicherweise lediglich Atmosphärendruck aufweisenden Innern des Motorgehäuses, wodurch eine Strömung in Richtung des Motorgehäuses erzeugt wird.

Um ein solches Eindringen von Verunreinigungen in die Lagerung des Elektromotors zu vermeiden, wird in der DE 10 2006 024 420 A1 vorgeschlagen, zwischen einer das Verdichtergehäuse schließenden Platte und einer das Motorgehäuse zum Verdichter hin verschließenden Platte, durch welche die Welle ragt, zwei Abdichtringe auf der Welle anzuordnen, die jeweils in Nuten der Welle befestigt sind. Axial zwischen diesen Abdichtringen ist ein Spalt zwischen der Motorgehäuseabdeckplatte und der Verdichtergehäuseabdeckplatte ausgebildet, der wiederum mit einem Kanal verbunden ist, der über einen Luftfilter mit dem Lufteinlass verbunden ist.

Der Druck in dem Spalt entspricht dabei etwa dem Druck im Innern des Motorgehäuses. Es ist daher davon auszugehen, dass zumindest Reste der Verunreinigungen entlang der Welle in Richtung der Lagerung strömen. Des Weiteren wird durch die Verwendung der Abdeckplatten der axiale Bauraum vergrößert und es ist notwendig, zusätzliche Leitungen zur Abführung des verunreinigten Gases aus dem Spalt zum Lufteinlass vorzusehen.

Des Weiteren ist aus der GB 2508647 A ein elektrischer Verdichter bekannt, bei dem zwischen dem Spiralkanal und dem Lager eine Gleitringdichtung angeordnet ist. Der Sperrgasstrom wird über den Motorraum angesaugt, so dass Probleme am Lager entstehen können.

Es stellt sich daher die Aufgabe einen elektrischen Verdichter zu schaffen, mit dem Schäden an den Lagern sowie an den anderen Bauteilen des Elektromotors durch eindringende Verunreinigungen und Kondensate zuverlässig vermieden werden können, wobei möglichst kein zusätzlicher Bauraum benötigt werden soll, auf zusätzliche Leitungen verzichtet werden soll und ein minimaler Verschleiß vorliegt.

Diese Aufgabe wird durch einen elektrischen Verdichter mit den Merkmalen des Hauptanspruchs 1 gelöst.

Dadurch, dass die Dichtungseinheit eine Gleitringdichtung mit zumindest zwei korrespondierenden Dichtelementen aufweist, deren wirksame Dichtfläche strömungstechnisch zwischen dem Spiralkanal und einem Strömungskanal angeordnet ist, der nach radial außen gerichtet und als Bohrung im Elektromotorgehäuse ausgeführt ist und über den ein Sperrgasstrom ansaugbar ist, wobei der Strömungskanal eine Öffnung zur Umgebung des Verdichters aufweist, über die der Sperrgasstrom ansaugbar ist und wobei die Gleitringdichtung axial zwischen dem Laufrad und einem Wälzlager der Lagereinheit angeordnet ist, über welches die Antriebswelle im Elektromotorgehäuse gelagert ist, wird eine zuverlässige Abdichtung geschaffen, ohne zusätzlichen Bauraum im Vergleich zu bekannten Ausführungen zu benötigen. Durch den angesaugten Sperrgasstrom wird dem Spülgefälle aufgrund der Druckdifferenz zwischen dem Motorgehäuse und dem Verdichtergehäuse entgegengewirkt. Zusätzliche Leitungen werden ebenfalls nicht benötigt. Durch die Dichtung ohne berührende Teile wird der Verschleiß reduziert. Entsprechend wird auf einfache Weise eine Verbindung zur Umgebung hergestellt, so dass stetig ausreichend Sperrgas zur Abdichtung zur Verfügung steht. Auf zusätzliche Leitungen kann verzichtet werden. Es können nun kostengünstige ölgeschmierte Wälzlager verwendet werden, da ein Ausspülen der Schmierung verhindert wird. Entsprechend steht eine langlebige Lagerung zur Verfügung. Auf zusätzliche Bauteile kann verzichtet werden. Es sind keine weiteren Montageschritte erforderlich.

Vorzugsweise ist die Gleitringdichtung eine gasgeschmierte Gleitringdichtung, deren erstes Dichtelement ein radial gelagerter und axial beweglicher in Richtung eines zweiten Dichtelementes vorgespannter Gleitring ist, und deren zweites Dichtelement ein fest auf der Antriebswelle befestigter axial zum ersten Dichtelement gegenüberliegender Gegenring mit hydrodynamisch wirksamen Nuten ist, durch die bei Drehung des Gegenringes ein Sperrgasstrom vom Strömungskanal in Richtung des Spiralkanals entsteht. Eine derartig aufgebaute Gleitringdichtung hat sich als hocheffizientes Dichtmittel für den elektrischen Verdichter herausgestellt, da durch den bei Bewegung der Welle und somit Bewegung des Gegenringes entstehenden Sperrgasstrom ein Gegendruck zum sonst vorhandenen Spülgefälle aufbaut, durch den verhindert wird, dass der durch den Verdichter geförderte Sperrgasstrom mit den Verunreinigungen zum Lager des Verdichters gelangen kann. Zusätzlich ist dieser Druck so hoch, dass ein geringer Leckgasstrom in Richtung des Verdichtergehäuses erfolgt.

In einer weiterführenden Ausführung weist die Gleitringdichtung ein Dichtungsgehäuse auf, welches am Motorgehäuse befestigt ist und an dem ein Elastomerring befestigt ist, welcher zwischen dem Dichtungsgehäuse und dem Gleitring angeordnet ist. Da zwischen dem Gleitring und dem Dichtungsgehäuse keine Relativbewegung auftritt, kann der vollständig dichtende Elastomerring verwendet werden, so dass durch diesen Spalt ebenfalls kein Gas in Richtung des Lagers gelangen kann.

Um zu vermeiden, dass aus der Umgebung Schmutzstoffe oder Ölnebel angesaugt werden, ist vorteilhafterweise an der Öffnung des Strömungskanals eine diffusionsoffene und zirkulationsoffene Membran befestigt.

In einer hierzu weiterführenden Ausführungsform ist die Membran in einem Membrangehäuse befestigt, welches formschlüssig unter Zwischenlage einer Dichtung an der Öffnung des Strömungskanals befestigt ist. Entsprechend kann das Sperrgas ausschließlich über die Membran in den Strömungskanal gelangen. Durch die formschlüssige Ausbildung der Befestigung beispielsweise über eine Clipsverbindung ist der Einbau sehr einfach. Die Membran kann dabei durch Deckel oder Filter gegen Schmutz geschützt werden.

Weiterhin ist es vorteilhaft, wenn der Gegenring der Gleitringdichtung mit seinem ersten axialen Ende gegen einen Innenring des Wälzlagers anliegt und mit seinem zweiten axialen Ende gegen das Laufrad anliegt. Bei einer derartigen Ausführung wird nur ein minimaler axialer Bauraum benötigt. Der Gegenring fungiert gleichzeitig zu seiner Dichtwirkung auch zur axialen Fixierung des Lagers auf der Welle.

Eine besonders einfache Montage ergibt sich, wenn das Dichtungsgehäuse in eine Aufnahmeöffnung am axialen Ende des Motorgehäuses eingepresst ist. Auf zusätzliche Bauteile zur Befestigung kann so verzichtet werden.
Es wird somit ein elektrischer Verdichter für eine Verbrennungskraftmaschine geschaffen, der eine lange Lebensdauer aufweist, das ein Eindringen von Verschmutzungen aus dem Fördergas in die Lager des Elektromotors zuverlässig verhindert wird. Der Verschleiß wird hierdurch minimiert. Des Weiteren wird ein geringer Bauraum verwendet und der Verdichter ist einfach herzustellen und zu montieren.

Ein Ausführungsbeispiel eines erfindungsgemäßen elektrischen Verdichters ist in den Figuren dargestellt und wird nachfolgend beschrieben.

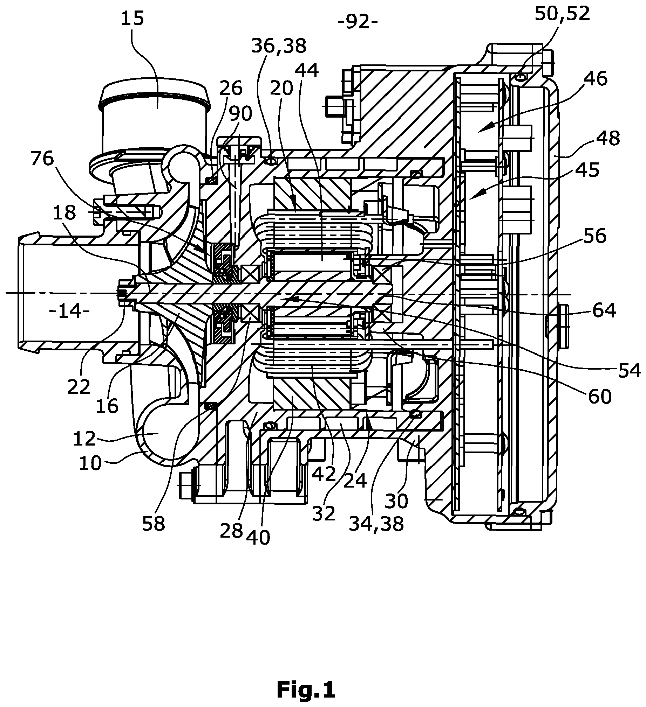

Figur 1 zeigt eine Seitenansicht eines erfindungsgemäßen elektrischen Verdichters in teilweise geschnittener Darstellung.
Figur 2 zeigt einen ersten vergrößerten Ausschnitt A des in Figur 1 dargestellten elektrischen Verdichters.
Figur 3 zeigt einen zweiten vergrößerten Ausschnitt B des in Figur 1 dargestellten elektrischen Verdichters.

Der erfindungsgemäße elektrische Verdichter besteht aus einem Verdichtergehäuse 10, welches einen Spiralkanal 12 mit einem axialen Einlass 14 und einem tangentialen Auslass 15 bildet. Im Innern des Verdichtergehäuses 10 ist ein Laufrad 16 drehbar angeordnet. Das Laufrad 16 ist auf einer Antriebswelle 18 eines Elektromotors 20 befestigt und über eine Mutter 22 gegen axiales Verschieben gesichert.

Ein Elektromotorgehäuse 24, welches den Elektromotor 20 umgibt, ist unter Zwischenlage einer Dichtung 26 fest mit dem Verdichtergehäuse 10 verbunden. Das Elektromotorgehäuse 24 besteht aus einem ersten Motorgehäuseteil 28, an dem das Verdichtergehäuse 10 befestigt ist sowie einem zweiten Motorgehäuseteil 30, welches von der zum Verdichtergehäuse 10 entgegengesetzten axialen Seite über und axial gegen das erste Motorgehäuseteil 28 geschoben wird. An der Außenseite des ersten Motorgehäuseteils 28 ist eine schneckenförmige Nut 32 ausgebildet, durch die Kühlmittel strömt. Am axialen Ende des ersten Motorgehäuseteils 28 ist eine erste ringförmige Radialnut 34 ausgebildet. Am axial gegenüberliegenden Ende der schneckenförmigen Nut 32 ist eine weitere Radialnut 36 am ersten Motorgehäuseteil 28 ausgebildet. Der gesamte Bereich in dem die Nuten 32, 34, 36 ausgebildet sind, ist vom zweiten Gehäuseteil 30 umgeben, welches die Nuten 32, 34, 36 radial verschließt. In den beiden Radialnuten 34, 36 sind zusätzlich Dichtringe 38 angeordnet, die die schneckenförmige Nut 32 nach außen abdichten. Im Inneren des ersten Motorgehäuseteils 28 ist ein Stator 40 mit seinen Wicklungen 42 befestigt. Dieser wirkt in bekannter Weise mit einem Rotor 44 zusammen, der fest auf der Antriebswelle 18 angeordnet ist, so dass diese bei entsprechender Bestromung des Stators 40 mit dem Rotor 44 und damit das Laufrad 16 im Verdichtergehäuse 10 gedreht werden. Die Bestromung des Stators 40 erfolgt über die Wicklungen 42, welche hierzu mit einer Elektronikeinheit 45 verbunden sind, die am zum Verdichtergehäuse 10 entgegengesetzten axialen Ende des Elektromotorgehäuses 24 in einer Aufnahmeöffnung 46 angeordnet ist. Diese Aufnahmeöffnung 46 wird über einen Deckel 48 verschlossen, der unter Zwischenlage einer in einer Radialnut 50 angeordneten Dichtung 52 am zweiten Motorgehäuseteil 30 befestigt wird.

Die Lagerung der Antriebswelle 18 erfolgt über eine Lagereinheit 54, welche aus zwei Wälzlagern 56, 58 besteht. Das erste dieser Wälzlager 56 ist am zum Laufrad 16 abgewandten axialen Ende der Antriebswelle 18 angeordnet und stützt sich radial gegen einen sich in axialer Richtung des Rotors 44 erstreckenden ringförmigen Vorsprung 60 des zweiten Motorgehäuseteils 30 ab. Axial liegt das Wälzlagers 56 gegen einen Absatz 64 der Antriebswelle 18 an.

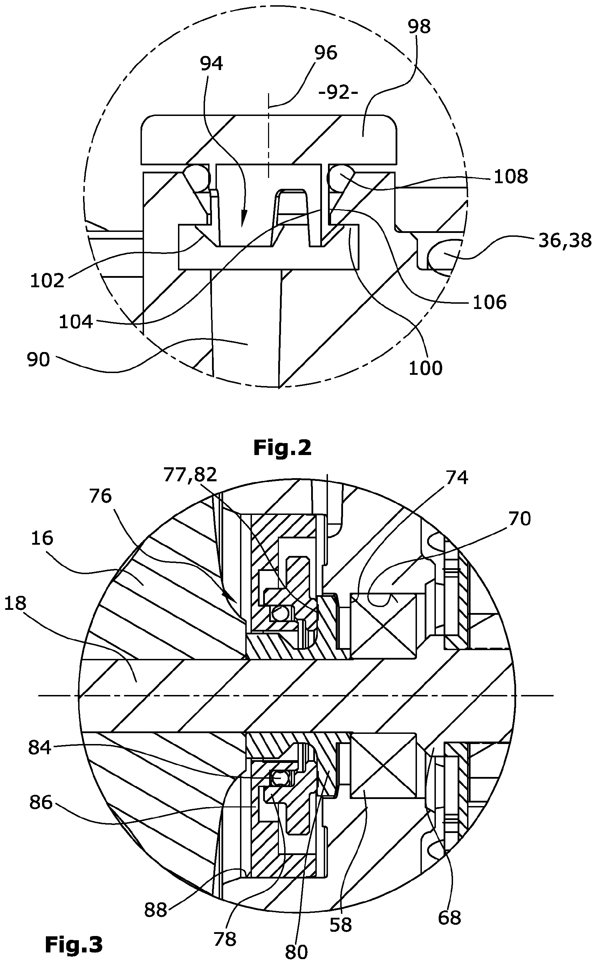

Das zweite Wälzlager 58 befindet sich an der entgegengesetzten Seite des Rotors 44. Das Wälzlager 58 liegt ebenfalls gegen einen Absatz 68 der Antriebswelle 18 an, wie in Figur 3 zu erkennen ist. Das Wälzlager 58 ist in eine Aufnahme 70 des ersten Motorgehäuseteils 28 eingepresst, wobei das Wälzlager 58 axial an der zum Laufrad 16 weisenden Seite gegen einen Absatz 74 des ersten Motorgehäuseteils 28 anliegt. Des Weiteren liegt ein innerer Teil des Wälzlagers 58 gegen eine Dichtungseinheit an, über die ein Eindringen von Schmutzstoffen, Ruß oder korrosiven Gasverbindungen in Richtung der Wälzlager 56, 58 erfindungsgemäß verhindert wird.

Diese Dichtungseinheit ist als gasgeschmierte Gleitringdichtung 76 ausgeführt. Diese weist eine Dichtfläche 77 zwischen einem als erstes Dichtelement dienenden Gleitring 78 auf und einem als zweites Dichtelement wirkenden Gegenring 80 auf, gegen den das Wälzlager 58 anliegt. Am Gegenring 80, der fest auf der Antriebswelle 18 angeordnet ist, sind hydrodynamisch wirksame, geformte Nuten 82 im Bereich der Dichtfläche 77 ausgebildet, die axial dem axial beweglichen und zum Gegenring 80 vorgespannten Gleitring 78 gegenüber liegen, so dass bei Drehung der Antriebswelle 18 und damit dem Gegenring 80 in diesen Nuten 82 eine Strömung mit folgender Druckdifferenz entsteht. Der Druck ist dabei radial außen am Gegenring 80 im Bereich der Dichtfläche 77 höher als innen, so dass ein Sperrgasstrom von radial außen nach innen entlang der Dichtfläche 77 entsteht.

Der Gleitring 78 wird über einen Elastomerring 84, der an einem Dichtungsgehäuse 86 befestigt ist, radial gelagert und axial federnd gegebenenfalls mit einer zusätzlichen Feder in Richtung des Gegenrings 80 belastet. Das Dichtungsgehäuse 86 ist hierzu fest in eine Aufnahmeöffnung 88 im ersten Motorgehäuseteil 28 eingepresst. Zusätzlich dichtet der Elastomerring 84 radial den Spalt zwischen dem Dichtungsgehäuse 86 und dem Gleitring 78 ab. Die gesamte Gleitringdichtung 76 ist an der Rückseite des Laufrades 16 angeordnet. An dieser Rückseite des Laufrades 16 entsteht bei der Drehung des Laufrades üblicherweise ein Überdruck, dem jedoch durch die Gleitringdichtung 76 ein höherer Gegendruck entgegensteht, so dass eine Strömung in Richtung des Laufrades 16 entsteht. Damit tatsächlich eine solche Gasströmung entstehen kann, ist im ersten Motorgehäuseteil 28 ein radial nach außen weisender Strömungskanal 90 ausgebildet, über den eine fluidische Verbindung zur Umgebung 92 des Verdichters hergestellt wird, so dass aus der Umgebung 92 ein Sperrgasstrom angesaugt werden kann, welche aus der Umgebung 92 entlang des Strömungskanals 90 zwischen Gegenring 80 und Gleitring 78, sowie zwischen Gegenring 80 und Dichtungsgehäuse 86 zum Laufrad 16 und in den Spiralkanal 12 strömen kann. Eine Berührung der beiden Dichtelemente 78, 80 tritt dabei nicht auf, da der Druck in den Nuten 82 der Federkraft entgegenwirkt und zwischen den Dichtelementen ein Luftpolster entsteht, durch welches Reibflächen aufgehoben und so der Verschleiß minimiert wird.

Um zu verhindern, dass Schmutzstoffe oder unerwünschte Gase mit in den Strömungskanal 90 gesaugt werden, ist, wie in Figur 2 dargestellt ist, an einer Öffnung 94 des Strömungskanals 90 zur Umgebung 92 eine diffusionsoffene Membran 96 beispielsweise aus Goretex befestigt. Diese diffusionsoffene Membran 96 ist in einem Membrangehäuse 98 befestigt, welches formschlüssig über eine Clipsverbindung an der Öffnung 94 befestigt ist. Hierzu ist im Bereich der Öffnung 94 ein Hinterschnitt 100 ausgebildet, in den in bekannter Weise Haken 102 greifen, die an den Enden von Federarmen 104 des Membrangehäuses 98 ausgebildet sind. An der zur Umgebung 92 weisenden Öffnung 94 ist eine ringförmige Fase 106 ausgebildet, in der eine Dichtung 108 angeordnet ist, der durch das Membrangehäuse 98 in die Fase 106 gepresst wird, so dass der Sperrgasstrom ausschließlich durch die Membran 96 angesaugt werden kann. Die Membran 96 wird über zusätzliche Schutzelemente vor Schmutzstoffen geschützt.

Dies hat zur Folge, dass lediglich ein geringer sauberer Luftstrom in den Strömungskanal 90 strömt, über den einerseits verhindert wird, dass verschmutztes Gas oder Schmutzstoffe aus dem Spiralkanal 12 in Richtung der Lager 56, 58 strömen kann und andererseits eine thermische Trennung zwischen dem Spiralkanal 12 und dem Elektromotor 20 verursacht, so dass dieser geringer thermisch belastet wird. So können fettgeschmierte Wälzlager verwendet werden, da ein Ausspülen der Lager 56, 58 verhindert wird. Auch auf eine zusätzliche Abschirmung der Elektronikeinheit 45 kann so verzichtet werden. Eine Korrosion oder Versumpfung des Verdichters wird so zuverlässig verhindert. Aufgrund der geringen Luftmenge wird auch die Regelung des Verdichters nicht negativ beeinflusst.

Es sollte deutlich sein, dass der Schutzbereich des Hauptanspruchs nicht auf das beschriebene Ausführungsbeispiel beschränkt ist.

## Patentansprüche

1. Elektrischer Verdichter für eine Verbrennungskraftmaschine mit
einem Verdichtergehäuse (10) mit einem Spiralkanal (12),
einem Laufrad (16), welches im Verdichtergehäuse (10) angeordnet ist,
einem Elektromotor (20),
einem Elektromotorgehäuse (24), in dem der Elektromotor (20) angeordnet ist, und an dem das Verdichtergehäuse (10) befestigt ist, einer Antriebswelle (18), die durch den Elektromotor (20) antreibbar ist, die über eine Lagereinheit (54) im Elektromotorgehäuse (24) gelagert ist und auf der das Laufrad (16) befestigt ist, und einer Dichtungseinheit, welche axial zwischen dem Laufrad (16) und der Lagereinheit (54) des Elektromotors (20) angeordnet ist, wobei die Dichtungseinheit eine Gleitringdichtung (76) mit zumindest zwei korrespondierenden Dichtelementen (78, 80) aufweist, deren wirksame Dichtfläche (77) strömungstechnisch zwischen dem Spiralkanal (12) und einem Strömungskanal (90) angeordnet ist, und
wobei die Gleitringdichtung (76) axial zwischen dem Laufrad (16) und einem Wälzlager (58) der Lagereinheit (54) angeordnet ist,
**dadurch gekennzeichnet, dass**
der Strömungskanal (90) nach radial außen gerichtet und als Bohrung im Elektromotorgehäuse (24) ausgeführt ist und über den, während des Betriebs, ein Sperrgasstrom ansaugbar ist, wobei der Strömungskanal (90) eine Öffnung (94) zur Umgebung (92) des Verdichters aufweist, über die, während des Betriebs, der Sperrgasstrom ansaugbar ist.

2. Elektrischer Verdichter für eine Verbrennungskraftmaschine nach Anspruch 1,
**dadurch gekennzeichnet, dass**
die Gleitringdichtung eine gasgeschmierte Gleitringdichtung (76) ist, deren erstes Dichtelement ein axial gegen ein zweites Dichtelement vorgespannter und axial beweglicher Gleitring (78) ist und deren zweites Dichtelement ein fest auf der Antriebswelle (18) befestigter axial zum ersten Dichtelement (78) gegenüberliegender Gegenring (80) mit hydrodynamisch wirksamen Nuten (82) ist, durch die bei Drehung des Gegenringes (80) ein Sperrgasstrom vom Strömungskanal (90) in Richtung des Spiralkanals (12) entsteht.

3. Elektrischer Verdichter für eine Verbrennungskraftmaschine nach Anspruch 2,
**dadurch gekennzeichnet, dass**
die Gleitringdichtung (76) ein Dichtungsgehäuse (86) aufweist, welches am Elektromotorgehäuse (24) befestigt ist und an dem ein Elastomerring (84) befestigt ist, welcher zwischen dem Dichtungsgehäuse (86) und dem Gleitring (78) angeordnet ist.

4. Elektrischer Verdichter für eine Verbrennungskraftmaschine nach einem der vorhergehenden Ansprüche,
**dadurch gekennzeichnet, dass**
an der Öffnung (94) des Strömungskanals (90) eine diffusionsoffene Membran (96) befestigt ist.

5. Elektrischer Verdichter für eine Verbrennungskraftmaschine nach Anspruch 4,
**dadurch gekennzeichnet, dass**
die Membran (96) in einem Membrangehäuse (98) befestigt ist, welches formschlüssig unter Zwischenlage einer Dichtung (108) an der Öffnung (94) des Strömungskanals (90) befestigt ist.

6. Elektrischer Verdichter für eine Verbrennungskraftmaschine nach einem der vorhergehenden Ansprüche,
**dadurch gekennzeichnet, dass**
der Gegenring (80) der Gleitringdichtung (76) mit seinem ersten axialen Ende gegen einen Innenring (66) des Wälzlagers (58) anliegt und mit seinem zweiten axialen Ende gegen das Laufrad (16) anliegt.

7. Elektrischer Verdichter für eine Verbrennungskraftmaschine nach einem der Ansprüche 3 bis 6,
**dadurch gekennzeichnet, dass**
das Dichtungsgehäuse (86) in eine Aufnahmeöffnung (88) am axialen Ende des Elektromotorgehäuses (24) eingepresst ist.

## Claims

1. Electric compressor for an internal combustion engine comprising
a compressor housing (10) with a spiral duct (12),
an impeller (16) arranged in the compressor housing (10),
an electric motor (20),
an electric motor housing (24) in which the electric motor (20) is arranged and to which the compressor housing (10) is fastened,
a drive shaft (18) adapted to be driven by the electric motor (20) and mounted in the electric motor housing (24) via a bearing unit (54) and on which the impeller (16) is fastened, and
a sealing unit arranged axially between the impeller (16) and the bearing unit (54) of the electric motor (20),
wherein the sealing unit comprises a mechanical seal (76) with at least two corresponding sealing elements (78, 80) whose effective sealing surface (77) is arranged, in terms of fluidics, between the spiral duct (12) and a flow duct (90), and
wherein the mechanical seal (76) is arranged axially between the impeller (16) and a roller bearing (58) of the bearing unit (54)
**characterized in that**
the flow duct (90) is directed radially outward and is designed as a bore in the electric motor housing (24) and via which a seal gas flow can be drawn in operation, wherein the flow duct (90) has an opening (94) to the surroundings (92) of the compressor via which the seal gas flow can be drawn in operation.

2. Electric compressor for an internal combustion engine of claim 1, **characterized in that** the mechanical seal is a gas-lubricated mechanical seal (76), whose first sealing element is a sliding ring (78) axially biased against a second sealing element and axially movable, and whose second sealing element is a counter-ring (80) fixed on the drive shaft (18) axially opposite the first sealing element (78), the counter-ring having hydrodynamically effective grooves (82), by which, upon rotation of the counter-ring (80), a seal gas flow from the flow duct (90) in the direction of the spiral duct (12) is created.

3. Electric compressor for an internal combustion engine of claim 2, **characterized in that** the mechanical seal (76) has a seal housing (86) which is fixed to the electric motor housing (24) and to which an elastomeric ring (84) is fixed which is arranged between the seal housing (86) and the sliding ring (78).

4. Electric compressor for an internal combustion engine of one of the preceding claims, **characterized in that** a breathable membrane (96) is fixed at the opening (94) of the flow duct (90).

5. Electric compressor for an internal combustion engine of claim 4, **characterized in that** the membrane (96) is fastened in a diaphragm housing (98) which is positively fixed with the interposition of a seal (108) at the opening (94) of the flow duct (90).

6. Electric compressor for an internal combustion engine of one of the preceding claims, **characterized in that** the counter-ring (80) of the mechanical seal (76) abuts by its first axial end against an inner ring (66) of the roller bearing (58) and, by its second axial end, abuts against the impeller (16).

7. Electric compressor for an internal combustion engine of one of claims 3 to 6, **characterized in that** the seal housing (86) is pressed into a receiving opening (88) at the axial end of the electric motor housing (24).

## Revendications

1. Compresseur électrique pour moteur à combustion interne avec
un boitier de compresseur (10) comportant un canal hélicoidal (12),
une turbine (16) disposée dans le boitier de compresseur (10),
un moteur électrique (20),
un boitier de moteur électrique (24) dans lequel le moteur électrique (20) est disposé et auquel le boitier de compresseur (10) est fixé,
un arbre d'entrainement (18) pouvant être entrainé par le moteur électrique (20), l'arbre étant monté dans le boitier de moteur électrique (24) par l'intermédiaire d'une unité de palier (54) et la roue (16) étant fixée sur ledit arbre, et
une unité d'étanchéité qui est agencée axialement entre la roue (16) et une unité de palier (54) du moteur électrique (20),
l'unité d'étanchéité comprenant une garniture mécanique (76) avec au moins deux éléments d'étanchéité (78, 80) correspondantes, dont la surface d'étanchéité effective (77) est disposée, en termes de fluidique, entre le canal hélicoidal (12) et un canal d'écoulement (90), et
dans lequel la garniture mécanique (76) est disposée axialement entre la roue (16) et un roulement (58) de l'unité de palier (54),
**caractérisé en ce que**
le canal d'écoulement (90) est orienté radialement vers l'extérieur et est conçu comme un alésage dans le boitier du moteur électrique (24) et à travers lequel un courant de gaz d'étanchéité peut être aspiré lors de l'opération,
le canal d'écoulement (90) présentant une orifice (94) vers l'environnement (92) du compresseur, à travers laquelle le courant de gaz d'étanchéité peut être aspiré lors de l'opération.

2. Compresseur électrique pour moteur à combustion interne selon la revendication 1, **caractérisé en ce que** la garniture mécanique est une garniture mécanique (76) du type lubrifiée par gaz, dont le premier élément d'étanchéité est une bague coulissante (78) sollicitée axialement contre un deuxième élément d'étanchéité et axialement mobile, et dont le deuxième élément d'étanchéité est une contre-bague (80) fixée axialement sur l'arbre d'entrainement (18) opposé au premier élément d'étanchéité (78), le deuxième élément ayant des gorges (82) effectives hydrodynamiquement, par lesquelles, lors de la rotation de la contre-bague (80), un écoulement de gaz d'étanchéité est créé à partir du canal d'écoulement (90) ver le canal en hélicoidal (12).

3. Compresseur électrique pour moteur à combustion interne selon la revendication 2, **caractérisé en ce que** la garniture mécanique (76) comprend un logement de garniture (86) qui est fixé au boitier du moteur électrique (24) et auquel est fixée une bague en élastomère (84) qui est disposée entre le logement de garniture (86) et la bague coulissante (78).

4. Compresseur électrique pour moteur à combustion interne selon l'une quelconque des revendications précédentes, **caractérisé en ce qu'**une membrane (96) ouverte à la diffusion est fixée à l'ouverture (94) du canal d'écoulement (90).

5. Compresseur électrique pour moteur à combustion interne selon la revendication 4, **caractérisé en ce que** la membrane (96) est fixée dans un logement de membrane (98) qui est fixée par forme sur l'ouverture (94) du canal d'écoulement (90) avec interposition d'une garniture d'étanchéité (108)

6. Compresseur électrique pour moteur à combustion interne selon l'une quelconque des revendications, **caractérisé en ce que** la contre-bague (80) de la garniture mécanique (76) s'appuie contre une bague intérieure (66) du roulement (58) par sa première extrémité axiale et s'appuie, par sa deuxième extrémité axiale, contre la roue (16).

7. Compresseur électrique pour moteur à combustion interne selon l'une des revendications 3 à 6, **caractérisé en ce que** le logement de garniture (86) est pressé dans une ouverture de réception (88) à l'extrémité axiale du boitier de moteur électrique (24).
